# EUROPÄISCHE PATENTSCHRIFT

(11) **EP 1 634 413 B1**
(45) Veröffentlichungstag und Bekanntmachung des Hinweises auf die Patenterteilung: **13.07.2011**
(21) Anmeldenummer: 04733306.7
(22) Anmeldetag: 17.05.2004
(51) Int. Cl.: H04L 12/56

(54) **VERFAHREN UND VORRICHTUNG ZUM STEUERN VON DATENVERBINDUNGEN IN EINEM DATENNETZ MIT EINER VIELZAHL VON DATENNETZKNOTEN**
METHOD AND DEVICE FOR CONTROLLING DATA CONNECTIONS IN A DATA NETWORK COMPRISING A PLURALITY OF DATA NETWORK NODES
PROCEDE ET DISPOSITIF DE COMMANDE DE LIAISONS DE DONNEES DANS UN RESEAU DE DONNEES COMPORTANT UNE PLURALITE DE NOEUDS DE RESEAU DE DONNEES

(30) Priorität: 30.05.2003 DE 10324470
(43) Veröffentlichungstag der Anmeldung: 15.03.2006
(73) Patentinhaber: Deutsche Telekom AG, 53113 Bonn (DE)
(72) Erfinder: HISCHKE, Sven, 53844 Troisdorf (DE); WEISS, Erik, NL-6291 GB Vaals (NL); XU, Bangnan, 64293 Darmstadt (DE)
(74) Vertreter: Bardehle, Heinz
(86) Internationale Anmeldenummer: PCT/DE2004/001037
(87) Internationale Veröffentlichungsnummer: WO 2004/109988

(56) Entgegenhaltungen:
- EP-A- 1 255 368
- WO-A-00/42743
- US-A- 5 920 545

## Beschreibung

Die Erfindung betrifft ein Verfahren zum Steuern von Datenverbindungen in einem Datennetz mit einer Vielzahl von Datennetzknoten gemäß Anspruch 1 und eine entsprechende Vorrichtung gemäß Anspruch 6.

In Datennetzen mit einer Vielzahl von Datennetzknoten erfolgt eine Datenverbindung von einer Quelle zu einem Ziel über eine Route bzw. einen Weg in dem Datennetz, der eine bestimmte Anzahl von Datennetzknoten umfasst. Bei einer Ende-Zu-Ende Verbindung in einem derartigen Datennetz laufen daher Datenpakete von der Quelle zum Ziel über mehrere Datennetzknoten. Diese Datennetzknoten arbeiten wie Relaisstationen.

In einem Datennetz mit dynamischen bzw. mobilen Datennetzknoten, beispielsweise einem Funknetz mit mobilen Funkterminals als Datennetzknoten, schwankt in der Regel die Übertragungsqualität einer Datenverbindung. Derartige Datennetze werden insbesondere auf Grund der mittlerweile großen Verbreitung von Wireless LAN-Netzwerken und der Einführung von UMTS (Universal Mobile Telecommunication System) in Zukunft zunehmend an Bedeutung gewinnen. Ein wichtiges Ziel bei derartigen Datennetzen besteht daher darin, eine hohe Datenübertragungsrate trotz der schwankenden Übertragungsqualität zu erreichen.

Bei Funknetzen werden Zugangsnetze und Ad-hoc Netze unterschieden. Ad-hoc Netze ermöglichen eine selbstorganisierende Organisation. Da die Funkreichweite bei Funksystemen mit einer hohen Datenrate in der Regel begrenzt ist, werden zunehmend so genannte Multihop-Datenverbindungen in Datennetzen eingesetzt. Als Datennetzknoten können beispielsweise in einem Ad-hoc-Funknetz einzelne Laptop-Computer dienen, die mit einer im Ad-hoc Modus betriebenen Funkschnittstelle versehen sind. Multihop-Datenverbindungen werden vor allem dann eingesetzt, wenn sich das Ziel nicht in direkter Funkreichweite der Quelle befindet. Der verbindungsaufbau, die Verbindungsfindung und die Wiederherstellung von Verbindungen werden durch spezielle Routingprotokolle gewährleistet.

Sobald eine Datenverbindung zwischen einer Quelle und einem Ziel gefunden und aufgebaut wurde, kann sie zum Datentransport eingesetzt werden. Abhängig von der Dynamik der an der Datenverbindung beteiligten Datennetzknoten kann sich nun die Qualität der Datenverbindung fortwährend ändern. Im schlimmsten Fall kann die Datenverbindung unterbrochen werden, wenn sich ein an der Datenverbindung beteiligter Datennetzknoten aus der Funkreichweite seiner benachbarten Datennetzknoten heraus bewegt. In einem derartigen Fall informiert in der Regel ein zur Bruchstelle benachbarter Datennetzknoten die Quelle über die Bruchstelle der Datenverbindung. Die Quelle versucht dann wieder eine neue Verbindung mit dem Ziel aufzubauen. Hierzu initiiert die Quelle das erneute Versenden einer sogenannten Verbindungssuchnachricht, die durch das gesamte Datennetz gesendet wird. Es wird in diesem Fall von einem "Flooding" des Datennetzes gesprochen, da die Verbindungssuchnachricht das gesamte Datennetz "überflutet". Nachteilig an diesem "Flooding" ist der hohe Bedarf an Netzkapazität. Die für das "Flooding" erforderliche Netzkapazität steht außerdem anderen Datenverbindungen nicht zur Verfügung.

Beim Abbrechen einer Datenverbindung ist zudem kein Datentransport zwischen Quelle und Ziel mehr möglich. Datenpakete, die bereits von der Quelle an das Ziel gesendet wurden, die Bruchstelle allerdings nicht rechtzeitig passieren konnten, gehen verloren. Derartige Datenpakete müssen also von der Quelle erneut an das Ziel übertragen werden, wodurch sich in paketorientierten Datennetzen eine Erhöhung der Paketverzögerung sowie eine Kapazitätsverschwendung ergibt. Bei Transportprotokollen, wie beispielsweise das im Internet eingesetzte TCP (Transport Control Protocol), verringern diese hohen Verzögerungen den Durchsatz einer Datenverbindung und damit des gesamten Datennetzes.

Um eine besonders hohe Qualität einer Datenverbindung zu erzielen, ist daher die Kontinuität einer Ende-Zu-Ende Verbindung von wesentlicher Bedeutung. Dies gilt insbesondere dann, wenn kommerzielle Dienste über derartige Datennetze angeboten werden sollen.

Ein gattungsgemäßes, sämtliche Merkmale des Oberbegriffs des Anspruches 1 aufweisendes Verfahren zum Steuern von Datenverbindungen in einem Datennetz mit einer Vielzahl von Datenknoten sowie eine Vorrichtung zur Durchführung des Verfahrens ist in der US 5,920,545 A offenbart.

Aufgabe der vorliegenden Erfindung ist es, ein Verfahren und eine Vorrichtung zum Steuern von Datenverbindungen in einem

Datennetz mit einer Vielzahl von Datennetzknoten zu schaffen, die eine möglichst unterbrechungsfreie Ende-Zu-Ende Datenverbindung gewährleisten können.

Diese Aufgabe wird durch ein Verfahren zum Steuern von Datenverbindungen in einem Datennetz mit einer Vielzahl von Datennetzknoten mit den Merkmalen von Anspruch 1 und durch eine entsprechende Vorrichtung mit den Merkmalen von Anspruch 6 erreicht. Weitergehende Ausgestaltungen der Erfindung ergeben sich aus den abhängigen Ansprüchen.

Ein der Erfindung zu Grunde liegender wesentlicher Gedanke besteht darin, die Qualität einer Datenverbindung in einem Datennetz mit einer Vielzahl von Datennetzknoten nach der eingesetzten Kodierung zu beurteilen. In diesem Patent wird der Begriff Kodierung für die eingesetzten Kombinationen von physikalischen Übertragungsverfahren verwendet. Als Beispiel sei hier erwähnt, die Kombination aus Modulation und Punktierung beim OFDM Verfahren oder die verschiedenen Chip-Raten bei CDMA-Verfahren. Eie hohe Kodierung entspricht dabei einer hohen Datenraten. Die Daten werden über eine Datenverbindung in der Regel unterschiedlich kodiert übertragen, um in Abhängigkeit von der Kanalqualität eine möglichst sichere und störungsresistente Übertragung zu gewährleisten. Insbesondere in Funknetzen, die als Datennetze genutzt werden, ist eine Kodierung für eine ausreichende Übertragungsqualität von wesentlicher Bedeutung. In den meisten Datennetzen werden verschiedene Kodierungsverfahren eingesetzt, die dynamisch an die Qualität einer Datenverbindung angepasst werden können. Das bedeutet, dass bei einer Verschlechterung der Qualität einer Datenverbindung das Kodierungsverfahren an die verschlechterte Datenverbindung angepasst wird. Dies ist insbesondere in Funknetzen wie beispielsweise WLANs gemäß dem IEEE 802.11-Standard oder dem ETSI HIPERLAN/2-Standard, in GSM/GPRS-, CDMA- und UMTS-Mobilfunknetzen der Fall. Das für eine Datenverbindung eingesetzte Kodierungsverfahren spiegelt also die Qualität der Datenverbindung wieder. Durch eine Auswertung der eingesetzten Kodierungsverfahren für eine Datenverbindung, insbesondere des Verlaufs der eingesetzten Kodierungsverfahren kann nun die Qualität einer ersten Datenverbindung beurteilt und davon abhängig eine zweite Datenverbindung aufgebaut werden, die im Falle des Abbruchs oder im Falle einer starken Störung der ersten Datenverbindung als Ersatz-Datenverbindung benutzt wird. Das erfindungsgemäße Verfahren erkennt also rechtzeitig den Abbruch einer Datenverbindung bzw. eine drohende Unterbrechung der Datenverbindung und sorgt dafür, dass eine alternative Datenverbindung gesucht und gefunden wird. Dadurch kann im Moment eines Abbruchs der ersten Datenverbindung oder auch schon früher ohne jede Verzögerung auf eine zweite Datenverbindung gewechselt werden. Dies führt zu einer Verringerung der Kontrollsignale im Datennetz, insbesondere von Verbindungssuchnachrichten, die bisher nach Abbruch einer Datenverbindung von einer Quelle zum Auffinden einer neuen Datenverbindung ausgesendet wurden. Außerdem werden Paketverluste minimiert bzw. erheblich reduziert, wenn nicht gar vollständig ausgeschaltet. Schließlich wird auch vermieden, dass Daten bzw. Datenpakete erneut übertragen werden müssen bei einem Datenverbindungsabbruch.

Konkret betrifft die Erfindung nun ein Verfahren zum Steuern von Datenverbindungen in einem Datennetz mit einer Vielzahl von Datennetzknoten, bei dem die Qualität einer ersten Datenverbindung anhand der Anpassungen einer oder mehrerer für die erste Datenverbindung eingesetzten Kodierungen beurteilt und abhängig von der Beurteilung eine zweite Datenverbindung aufgebaut wird, die als Ersatz für die erste Datenverbindung genutzt wird. Als Datennetzknoten können hier Funkterminals agieren, die wie Daten-Relaisstationen wirken. Wesentlich für das erfindungsgemäße Verfahren ist, dass die Kodierung von Daten einer Datenverbindung dynamisch ist, d.h. in Abhängigkeit von der Übertragungsqualität der eingesetzten Datenverbindung angepasst werden kann. Durch die Beurteilung der Anpassungen einer oder auch mehrerer Kodierungen kann im Prinzip eine Vorhersage getroffen werden, ob die erste Datenverbindung in Zukunft unterbrochen wird.

Vorzugsweise erfolgt die Beurteilung der Qualität der ersten Datenverbindung dadurch, dass anhand der eingesetzten Kodierungen mindestens ein an der ersten Datenverbindung beteiligter erster Datennetzknoten eine Aussage trifft, ob die erste Datenverbindung instabil wird. Beispielsweise kann in einem Funknetz ein als Datennetzknoten agierendes erstes Funkterminal die Qualität der Datenverbindung zu einem benachbarten zweiten Funkterminal durch das benutzte Kodierungsverfahren für die Datenübertragung zwischen den beiden Funkterminals auswerten. Verschlechterte sich die Funkverbindung, ändert das sendende Terminal die Kodierung für seine Teilverbindung. Geschieht dies mehrmals hintereinander, kann davon ausgegangen werden, dass möglicherweise in Zukunft die Datenverbindung zwischen diesen beiden Funkterminals unterbrochen werden wird. Da das empfangene Terminal anhand der Kodierung die das sendende Terminal verwendet, diese Änderungen ebenfalls wahrnimmt, kann jedes der beiden Funkterminals die Aussage treffen, ob die Datenverbindung instabil werden wird.

Insbesondere kann es bei einer Aussage, dass die Datenverbindung instabil werden wird, die Suche nach einer zweiten Datenverbindung initiieren. Die Suche kann beispielsweise durch Aussenden einer ersten Nachricht vom mindestens einen ersten Datennetzknoten initiiert werden, der die Aussage getroffen hat, dass die erste Datenverbindung instabil wird. Hierbei wird die erste Nachricht an zweite Datennetzknoten gesandt, beispielsweise an zum ersten Datennetzknoten benachbarter Datennetzknoten.

Die Nachricht umfasst vorzugsweise die Anzahl der Übertragungen, die Adresse eines Senders und die Adresse eines Empfängers von Daten der ersten Datenverbindung. Unter der Anzahl der Übertragungen ("Time to Life": TTL) wird die Anzahl an Teilübertragungen verstanden, für welche Datenpakete der ersten Datenverbindung übertragen und bestehen können bis sie verworfen bzw. ungültig werden.

Vorzugsweise wird die Nachricht mit einer anderen Kodierung versendet als die bei der ersten Datenverbindung eingesetzte(n) Kodierung(en). Dadurch können nur Datennetzknoten die Nachricht verarbeiten, welche die anders kodierten Nachrichten empfangen und dekodieren können. Beispielsweise können dann Datennetzknoten die Nachricht nicht verarbeiten, wenn sie außerhalb der Empfangsreichweite der verwendeten Kodierung sind. Diese Vorgehensweise kann wirksam verhindern, dass Datennetzknoten der ersten Datenverbindung Teil der zweiten Datennetzverbindung werden.

Insbesondere ist die neue Kodierung eine höhere Kodierung als die bei der ersten Datenverbindung eingesetzte(n) Kodierung(en), wodurch die Nachricht über Verbindungen zwischen Datennetzknoten nicht übertragen werden kann, die eine schlechte Übertragungsqualität aufweisen. Dadurch werden Routen vermieden die als nicht stabil gelten.

Die zweite Datenverbindung wird vorzugsweise genutzt, wenn die erste Datenverbindung abbricht. Alternativ kann die zweite Datenverbindung aber auch bereits genutzt werden, wenn für die erste Datenverbindung eine vorgegebene Kodierung eingesetzt wird, beispielsweise eine besonders robuste d. h. niedrige Kodierung bei einer sehr schlechten Übertragungsqualität.

Gemäß einem weiteren Aspekt betrifft die Erfindung eine Vorrichtung zum Steuern von Datenverbindungen in einem Datennetz mit einer Vielzahl von Datennetzknoten, die derart ausgebildet sind, dass die Qualität einer ersten Datenverbindung anhand der Anpassungen einer oder mehrerer für die erste Datenverbindung eingesetzten Kodierungen beurteilt und abhängig von der Beurteilung eine zweite Datenverbindung aufgebaut wird, die als Ersatz für die erste Datenverbindung genutzt wird.

Vorzugsweise ist mindestens ein an der ersten Datenverbindung beteiligter erster Datennetzknoten ausgebildet, um die Beurteilung der Qualität der ersten Datenverbindung dadurch vorzunehmen, dass er anhand der eingesetzten Kodierungen eine Aussage trifft, ob die erste Datenverbindung instabil wird. Der mindestens eine erste Datennetzknoten kann beispielsweise programmtechnisch eingerichtet sein, um die vorgenannten Beurteilung auszuführen. Falls der mindestens eine erste Datennetzknoten eine Funkschnittstelle, beispielsweise eine Einsteckkarte für einen Personal Computer wie eine PCI-Karte oder eine PC-Card für einen Laptop-Computer oder einen USB-Funkadapter umfasst, kann deren bzw. dessen Betriebsprogramm entsprechend eingerichtet sein. Bereits vorhandene Funkschnittstellen mit einer Betriebssoftware in einem programmierbaren Speicher können entsprechend aktualisiert werden.

Ferner kann der mindestens eine erste Datennetzknoten ferner ausgebildet sein, um bei einer Aussage, dass die erste Datenverbindung instabil wird, die Suche nach der zweiten Datenverbindung zu initiieren.

Weiterhin kann der mindestens eine erste Datennetzknoten ausgebildet sein, die Suche durch Aussenden einer ersten Nachricht an zweite Datennetzknoten zu initiieren.

Vorzugsweise umfasst die Nachricht die Anzahl der Übertragungen, die Adresse eines Senders und die Adresse eines Empfängers von Daten der ersten Datenverbindung.

Insbesondere weist die Nachricht eine andere Kodierung auf als die bei der ersten Datenverbindung eingesetzte(n) Kodierung(en).

Typischerweise ist die andere Kodierung eine höhere Kodierung als die bei der ersten Datenverbindung eingesetzte(n) Kodierung(en).

Die Vorrichtung ist vorzugsweise ausgebildet, um auf die zweite Datenverbindung umzuschalten, wenn die erste Datenverbindung abbricht.

Alternativ oder auch zusätzlich kann die Vorrichtung ausgebildet sein, um auf die zweite Datenverbindung umzuschalten, wenn für die erste Datenverbindung eine vorgegebene Kodierung eingesetzt wird.

Schließlich umfasst das Datennetz vorzugsweise ein Funkdatennetz und mindestens zwei der Datennetzknoten sind Funkterminals. Das bedeutet, dass eine Datenverbindung in einem derartigen Datennetz eine Funkübertragungsstrecke umfassen kann, deren Übertragungsqualität unter anderem von der Bewegung wenigstens eines der an der Funkübertragungsstrecke beteiligten Terminals abhängt.

Weitere Vorteile und Anwendungsmöglichkeiten der vorliegenden Erfindung ergeben sich aus der nachfolgenden Beschreibung in Verbindung mit dem in den Zeichnungen dargestellten Ausführungsbeispielen. Diese zeigen in
Fig. 1 ein erstes Datennetz mit einer Vielzahl von Datennetzknoten, in dem ein erstes Ausführungsbeispiel des erfindungsgemäßen Verfahrens eingesetzt wird;
Fig. 2 ein zweites Datennetz mit einer Vielzahl von Datennetzknoten, bei dem ein zweites Ausführungsbeispiel des erfindungsgemäßen Verfahrens eingesetzt wird; und
Fig. 3 ein drittes Datennetz mit einer Vielzahl von Datennetzknoten, bei dem ein drittes Ausführungsbeispiel des erfindungsgemäßen Verfahrens eingesetzt wird.

Im Folgenden können gleiche und funktional gleiche Elemente und Verfahrensschritte mit den gleichen Bezugszeichen oder Bezeichnungen versehen sein.

Die im Folgenden beschriebenen Ausführungsbeispiele des erfindungsgemäßen Verfahrens zur dynamischen Anpassung von Multihop-Datenverbindungen in Datennetzen mit einer Vielzahl von Datennetzknoten sind im Prinzip unabhängig von einem Vorhersageverfahren für das Verhalten einer Datenverbindung. Bei allen Ausführungsbeispielen wird davon ausgegangen, dass ein Datennetzknoten, der Teil einer Datenverbindung ist, die Qualität der Datenverbindung im Hinblick auf das oder die eingesetzte(n) Kodierungsverfahren gemäß der Erfindung überwacht. Dieser Datennetzknoten teilt die Datenverbindung in zwei Teile: einen eingangsseitigen Teil, welcher der Teil der Datenverbindung auf der Seite der Quelle zwischen entweder der Quelle oder einem Vorgängerdatennetzknoten und dem Datennetzknoten ist, und ein ausgangsseitiger Teil, der Teil der Datenverbindung zwischen Datennetzknoten und entweder dem Ziel oder einem nachfolgendem Datennetzknoten in Richtung zum Ziel ist. Daher kann er im wesentlichen die drei folgenden unterschiedlichen Situationen in Bezug auf den eingangs- und den ausgangsseitigen Teil der Datenverbindung erkennen:
1. Die Qualität des ausgangsseitigen Datenverbindungsteils verschlechtert sich und dementsprechend werden für die Teildatenverbindung stabilere Kodierungsverfahren gewählt. Die Verhältnisse des eingangsseitigen Datenverbindungsteils bleiben konstant. Daraus kann der Datennetzknoten folgern, dass sich das Ziel oder ein Datennetzknoten von ihm entfernt, der zum ausgangsseitigen Datenverbindungsteil gehört.
2. Sowohl auf dem eingangs-, als auch auf dem ausgangsseitigen Teil der Datenverbindung wird die Übertragungsqualität schlechter und daher werden stabilere Kodierungsverfahren gewählt. Dies bedeutet, dass sich der Datennetzknoten selbst bewegt.
3. Die Qualität des eingangsseitigen Teils der Datenverbindung verschlechtert sich und es wird ein stabileres Kodierungsverfahren gewählt. Die Qualität des ausgangsseitigen Teils der Datenverbindung bleibt jedoch gleich. Daraus kann gefolgert werden, dass sich die Quelle oder ein Datennetzknoten des eingangsseitigen Teils der Datenverbindung vom Datennetzknoten entfernt.

Alle oben genannten Situationen können nun erkannt und ausgewertet werden, wie im Folgenden anhand der Schilderung von verschiedenen Ausführungsbeispielen gezeigt werden wird.

Das erste Ausführungsbeispiel des erfindungsgemäßen Verfahrens beruht auf einer rechtzeitige Datenverbindungsanpassung. Dies wird im Folgenden auch als Early Route Rearrangement (ERRA) bezeichnet. Ein entsprechendes ERRA-Protokoll betrifft insbesondere ein Verfahren, das die Route bzw. die Datenverbindung ändert, wenn vorhergesagt wird, dass eine Unterbrechung einer bestehenden Datenverbindung droht. Das ERRA-Verfahren wird daher gestartet, bevor eine Datenverbindung abbricht, beispielsweise wenn sich ein Datennetzknoten der Datenverbindung aus der Funkreichweite seiner benachbarten Datennetzknoten bewegt. Zudem verwendet das ERRA-Protokoll ein spezielles Kodierungsverfahren zum Versenden von Verbindungsänderungsnachrichten, die kurz als ERRA Request (ERRA_REQ) bezeichnet werden.

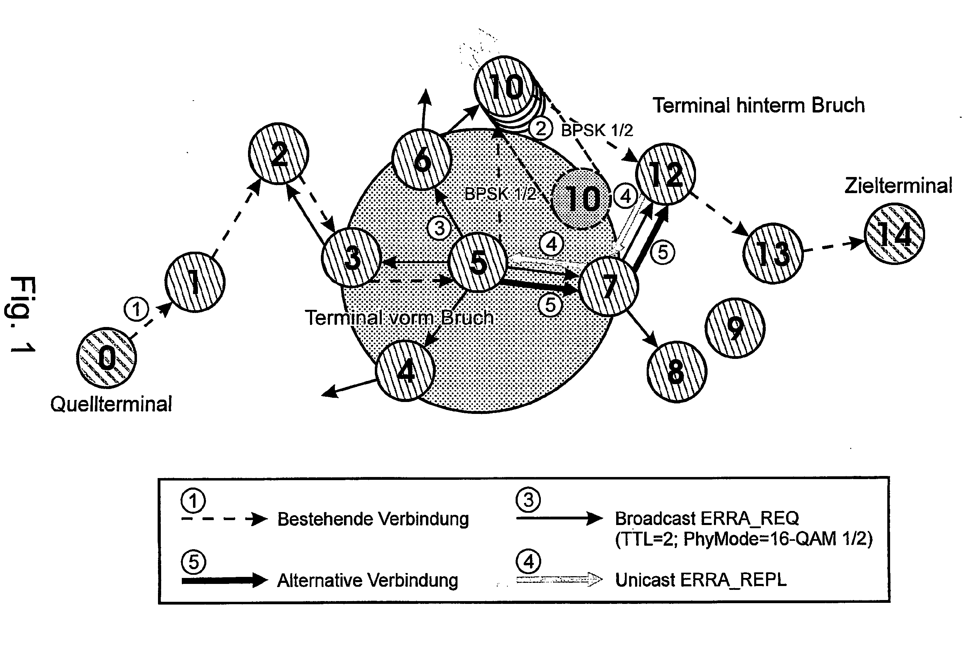

Fig. 1 zeigt anhand eines ersten Datennetzes mit insgesamt 14 Datennetzknoten (durchnumeriert von 1-14) beispielhaft den Ablauf des ERRA-Protokolls. In dem dargestellten Datennetz besteht eine erste Datenverbindung (gestrichelt dargestellt) von einem Quellterminal 0 zu einem Zielterminal 14. Das erste Datennetz ist ein Funknetzwerk und die Datennetzknoten sind dementsprechend Funkterminals.

Anfangs hat ein Routingprotokoll wie beispielsweise AODV eine Multihop-Datenverbindung vom Quellterminal 0 zum Zielterminal 14 aufgebaut (In Fig. 1 mit① bezeichnet). Nach Einrichtung dieser Datenverbindung und dem Beginn eines Datentransports über diese Datenverbindung entfernt sich ein Datennetzknoten bzw. ein Funkterminal 10 von der eingerichteten Route (in Fig. 1 mit②bezeichnet). Dadurch ändert sich die Qualität der Datenverbindung zwischen den benachbarten Datennetzknoten bzw. Funkterminals 5 und 10. Darauf reagiert eine im Datennetz eingesetzte Kodierungsanpassung, indem die Kodierung von übertragenen Daten zwischen den beiden Datennetzknoten 5 und 10 derart angepasst wird, dass trotz der verringerten Datenverbindungsqualität zwischen den beiden Datennetzknoten 5 und 10 eine genügend stabile Datenübertragung erfolgen kann. Diese Änderungen bzw. Anpassungen der Kodierung werden vom Datennetzknoten 5 beobachtet. Bei Überschreiten eines vorgegebenen Grenzwertes, also beispielsweise bei Verwendung einer vorgegebenen Kodierung auf Grund einer besonders schlechten Verbindungsqualität zwischen den Datennetzknoten 5 und 10, initiiert der Datennetzknoten 5 das erwähnte ERRA-Protokoll.

Hierzu sendet der Datennetzknoten 5 eine ERRA REQ-Nachricht aus (in Fig. 1 mit③bezeichnet), die an alle Datennetzknoten adressiert ist, die diese Nachricht empfangen können, im vorliegenden Fall die Datennetzknoten 3, 4, 6, 7 und 10. Die ERRA_REQ-Nachricht umfasst folgende Einträge: Die Anzahl der Übertragungen (auch als Time To Life (TTL) bezeichnet) und die IP-Adresse des Ziel- und des Quellterminals 14 bzw. 0.

Jeder Datennetzknoten bzw. jedes Funkterminal, der bzw. das diese Nachricht empfängt und eine Route zum Zielterminal 14 kennt, oder gar selber das Zielterminal ist, antwortet mit einer ERRA REP-Nachricht (in Fig. 1 ist die ERRA_REP-Nachricht mit④bezeichnet; sie wird in Fig. 1 auch als ERRA_REPL bezeichnet). Empfängt ein Datennetzknoten die ERRA_REQ-Nachricht, ohne das Zielterminal 14 zu kennen, verringert er das in der Nachricht enthaltenen TTL-Feld um 1 und sendet seinerseits die so geänderte Nachricht an alle seine benachbarten Datennetzknoten. Empfängt ein Datennetzknoten eine ERRA_REQ-Nachricht mit einem TTL-Feld, das 0 ist, so wird diese Nachricht von dem empfangenden Datennetzknoten nicht mehr weitergeleitet.

Das ERRA-Verfahren sieht vor, dass die ERRA_REQ-Nachricht empfindlicher, d.h. höher kodiert wird als die zwischen den beiden Datennetzknoten 5 und 10 übertragenen Datenpakete. Dadurch wird verhindert, dass der Datennetzknoten 10 die ERRA_REQ-Nachricht auf direktem Weg, d.h. durch seinen alten Vorgänger empfangen kann und mit seiner aktuellen Route antwortet, die ja in Zukunft geändert werden soll. Dieses Verfahren führt zu einer zweiten Datenverbindung, die eine höhere Kodierung einsetzt und damit eine bessere Kanalqualität als die erste Datenverbindung aufweist (in Fig. 1 mit ⑤ bezeichnet). Wie in Fig. 1 dargestellt ist, umfasst die zweite Datenverbindung als Datennetzknoten die Terminals 1, 2, 3, 5, 7, 12 und 13. An Stelle des Datennetzknotens 10 der ersten Datenverbindung wird bei der zweiten Datenverbindung der Datenverkehr zwischen Quell- und Zielterminal 0 bzw. 14 nun über den Datennetzknoten 7 geleitet.

Als Alternative zum Senden der ERRA REQ-Nachricht mit einer höheren Kodierung als die Kodierung, die zwischen den Datennetzknoten 5 und 10 der ersten Datenverbindung eingesetzt wird, kann der Datennetzknoten 5 eine direkte Antwort vom Datennetzknoten 10 verwerfen, da ihm bekannt ist, dass der Datennetzknoten 10 mit der zu ersetzenden Route bzw. ersten Datenverbindung antwortet.

Nachdem der Datennetzknoten 5 die ERRA_REP-Nachricht mit einem alternativen Routenvorschlag bzw. einer zweiten Datenverbindung erhalten hat, kann er entscheiden, ob er die alternative Route bzw. zweite Datenverbindung verwenden möchte oder ob weiterhin die alte Route bzw. erste Datenverbindung eingesetzt werden soll. Grundlage dieser Entscheidung kann beispielsweise die Anzahl der Datennetzknoten sein, die an der zweiten Datenverbindung bzw. alternativen Route beteiligt sind. Umfasst die neue Route bzw. zweite Datenverbindung mehr Datennetzknoten bzw. Quellterminals als die alte Route bzw. erste Datenverbindung, so kann der Datennetzknoten 5 bzw. der Initiator der Suche einer alternativen Route dies dem Quellterminal 0 mittels einer sogenannten ERRA_INFO-Nachricht mitteilen. Auf Grund dieser Nachricht kann das Quellterminal 0 entscheiden, ob die neue Route bzw. zweite Datenverbindung angenommen werden soll oder ob nach einer weiteren neuen Route bzw. dritten Datenverbindung als Alternative zur ersten Datenverbindung gesucht werden soll.

Wie in Fig. 1 dargestellt ist, wird als Kodierungsverfahren des Teils der Datenverbindung zwischen dem Datennetzknoten 5, 10 und 12 ein BPSK (Binary Phase Shift Keying)-1/2-Verfahren eingesetzt. Die ERRA_REQ-Nachricht wird mittels 16-QAM (Quadratur Amplitude Modulation) 1/2 kodiert. Dadurch ist es dem Datennetzknoten 10 nicht möglich die ERRA_REQ-Nachricht vom Datennetzknoten 5 zu dekodieren. In diesem Fall wird also die ausgesendete ERRA_REQ-Nachricht vom Datennetzknoten 5 anders kodiert als die Datenpakete, welche vom Datennetzknoten 10 empfangen werden können, wenn sie von Datennetzknoten 5 gesendet wurden.

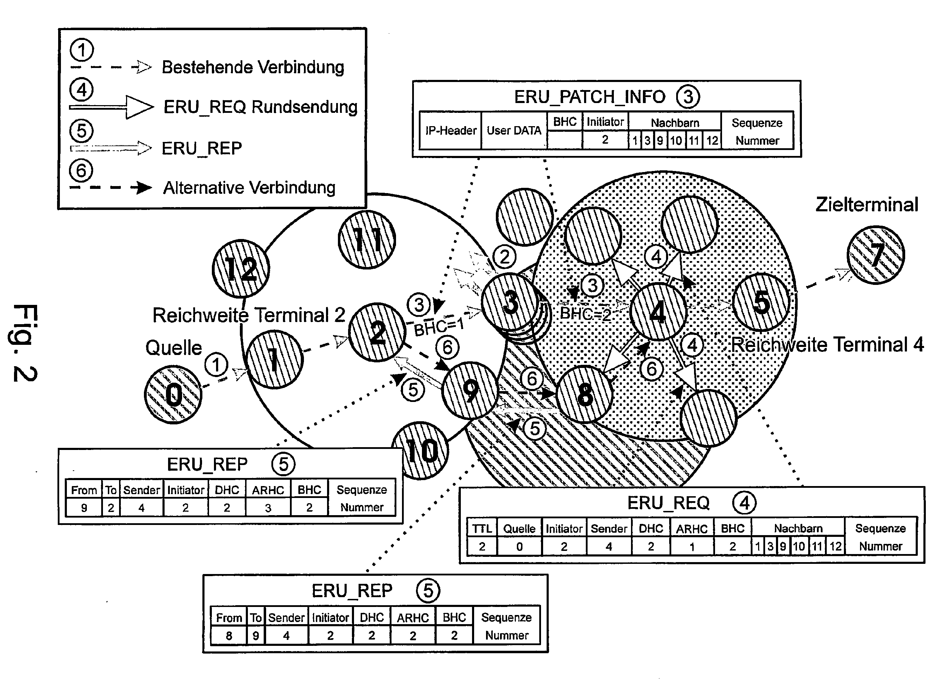

Das anhand der Fig. 2 verdeutlichte Ausführungsbeispiel des erfindungsgemäßen Verfahrens nutzt eine spezielle Situation, die durch die Vorhersage des Verhaltens der Qualität einer Datenverbindung entsteht. Zu einem Zeitpunkt, an dem die Vorhersage das baldige Abbrechen einer Datenverbindung meldet, besteht diese Datenverbindung noch. Dadurch haben die Datennetzknoten der Datenverbindung, welche im Bereich der Unterbrechung der Datenverbindung liegen, die Möglichkeit, gemeinsam nach einer zweiten Datenverbindung zu suchen, welche die durch die Unterbrechung der ersten Datenverbindung auftretende Lücke überbrückt. Das im Folgenden als frühe Verbindungserneuerung oder Early Route Update (ERU) bezeichnete Verfahren nutzt dies aus.

Wiederum wird davon ausgegangen, dass in einem zweiten Datennetz mit einem Quellterminal 0 und einem Zielterminal 7 sowie Datennetzknoten anfangs eine erste Datenverbindung zwischen dem Quellterminal 0 und dem Zielterminal 7 existiert (in Fig. 2 mit ① bezeichnet). Die erste Datenverbindung ist gestrichelt dargestellt und umfasst die Datennetzknoten 1, 2, 3, 4 und 5.

Der Datennetzknoten 3 bewegt sich von seinen benachbarten Datennetzknoten 2 und 4 weg, sodass sich in diesem Bereich die erste Datenverbindung, genauer gesagt deren Qualität verschlechtert (in Fig. 2 mit ② bezeichnet). Hiervon wird der benachbarte Datennetzknoten 2 auf dem eingangsseitigen Teil der ersten Datenverbindung, welcher das Quellterminal 0 umfasst, informiert. Daher weiß der Datennetzknoten 2, dass die Verbindung zum benachbarten Datennetzknoten 3 bald abbrechen wird. Er kann also die Voraussage treffen, dass die erste Datenverbindung abbrechen wird.

Das ERU-Verfahren geht nun davon aus, dass fast jeder Datennetzknoten seine Verbindung zu benachbarten Datennetzknoten permanent kontrolliert und ständig eine aktuelle Liste aufweist, in der alle seine benachbarten Datennetzknoten eingetragen sind, die sich in seiner Funkreichweite befinden. Diese Tabelle wird auch als so genannte Nachbarschaftstabelle bezeichnet. Steht die Funktionalität der permanenten Überwachung der Verbindungen zu benachbarten Datennetzknoten nicht zur Verfügung, kann ein Datennetzknoten mittels so genannter ERU_HELLO-Nachrichten aktiv nach benachbarten Datennetzknoten suchen.

Der Initiator des ERU-Verfahrens, der Datennetzknoten 2, kann nun Informationen seiner benachbarten Datennetzknoten, auch als PATCH_INFO bezeichnet, einem normalen Datenpaket hinzufügen (in Fig. 2 mit ③ bezeichnet). Bei dem in Fig. 2 dargestellten Datennetz würde der Datennetzknoten 2 als PATCH_INFO einem Datenpaket hinzufügen, dass seine benachbarten Datennetzknoten 1, 3, 9, 10, 11 und 12 sind. Dies stellt die erwähnte Nachbarschaftstabelle dar. Ferner umfasst PATCH_INFO die Adresse des Initiator-Datennetzknotens, im vorliegenden Fall die Adresse des Datennetzknotens 2, sowie eine Sequenznummer und einen Zähler für die Länge der Bruchstelle der ersten Datenverbindung. Der Zähler für die Länge der Bruchstelle wird auch als Breakage Hop Counter (BHC) bezeichnet. Diese PATCH_INFO-Nachricht wird mit einem Datenpaket vom Datennetzknoten 2 z.B. zum Datennetzknoten 3 gesendet.

Mit dem ersten Senden wird der BHC auf 1 gesetzt. Der Datennetzknoten 3 wurde mittlerweile von seiner eigenen Vorhersageeinheit über die Qualität der Datenverbindung zu benachbarten Datennetzknoten informiert über die Veränderung der Qualitäten der bei und von ihm ein- bzw. ausgehenden Datenverbindungen. Dadurch erkennt der Datennetzknoten 3, dass die Datenverbindungen zum abzubrechen droht, erhöht den BHC um 1 und leitet die PATCH_INFO-Nachricht zusammen mit den vom Datennetzknoten 2 empfangenen Datenpaket weiter zum Datennetzknoten 4.

Der Datennetzknoten 4 erkennt die PATCH_INFO-Nachricht und erkennt weiterhin, dass sich lediglich seine eingehende Datenverbindung, also die Datenverbindung zwischen ihm und dem Datennetzknoten 3 verändert. Er kann daraus schließen, dass seine Position stabil bleibt, sich aber der Datennetzknoten 3 entfernt. Er trennt die PATCH_INFO-Nachricht vom empfangenen Datenpaket und sendet eine ERU_REQ-Nachricht an alle seine benachbarten Datennetzknoten (in Fig. 2 mit④ bezeichnet. Die Anzahl von Hops (TTL) für diese Rundsendenachricht wird in Abhängigkeit vom BHC (hier TTL = 2) gewählt. Die ERU_REQ-Nachricht an alle benachbarten Datennetzknoten umfasst zwei weitere Zähler, einen für die Hops der alternativen zweiten Datenverbindung (Alternativ Route Hop Counter AHRC) und einen für die Hops zum Zielterminal 7 (Destination Hop Counter DHC). Der ARHC ist beim ersten Versenden 1 und wird bei jedem weiteren Senden um 1 erhöht. Der DHC enthält die Entfernung zum zielterminal 7 in Hops. Der TTL wird bei jedem Versenden um 1 verringert. Die ERU_REQ-Nachricht wird versendet, solange TTL größer als 0 ist.

Bei der in Fig. 2 dargestellten Situation reicht es bereits aus, dass die ERU_REQ-Nachricht ein Mal versendet wird vom Datennetzknoten 4, da der Datennetzknoten 8 einen der benachbarten Datennetzknoten kennt und direkt in Richtung des Initiators mit einer ERU_REP-Nachricht antwortet (in Fig. 2 mit⑤bezeichnet). Die anderen benachbarten Datennetzknoten leiten die ERU_REQ-Nachricht entsprechend dem TTL weiter.

Erhält der initiierende Datennetzknoten 2 die ERU_REP-Nachricht mit einer alternativen Route, kann er entscheiden, ob er diese verwenden möchte. Sind DHC und ARHC unterschiedlich, d.h. die Zahl der Hops ändert sich, dann muss der initiierende Datennetzknoten 2 das Quellterminal 0 darüber informieren mittels einer Nachricht ERU_INFO.

Es existiert jedoch eine Ausnahme. In der ERU_REQ-Nachricht ist ebenfalls die Adresse des Quellterminals 0 enthalten. Ist diese Adresse einem Datennetzknoten bekannt, d.h. ist das Quellterminal 0 in der direkten Nachbarschaft dieses Datennetzknotens, so kann dieser Datennetzknoten direkt an das Quellterminal 0 antworten, das den initiierenden Datennetzknoten mit einer ERU_INFO-Nachricht informiert. Anhand des DHC kann dann das Quellterminal 0 erkennen, ob und wie sich die Zahl der Hops geändert hat. Unter Verwendung des ERU-Verfahrens erreicht die alternative Datenverbindung maximal die Länge der Bruchstelle der ersten Datenverbindung plus 2 Hops. Die alternative Route ist in Fig. 2 mit⑥bezeichnet.

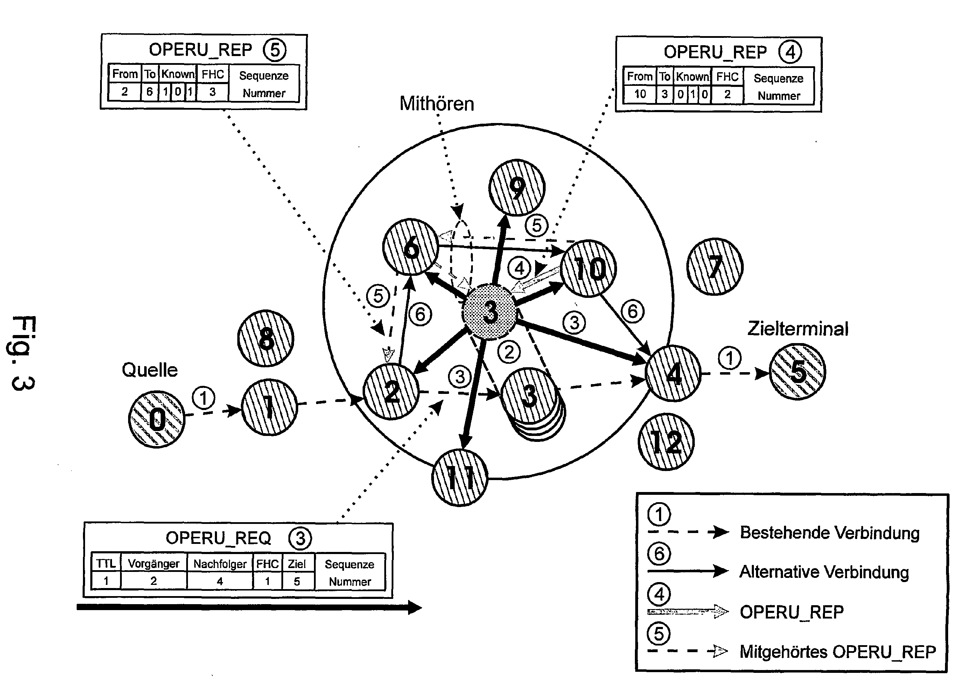

Das in Fig. 3 dargestellte dritte Ausführungsbeispiel des erfindungsgemäßen Verfahrens ist besonders geeignet für Bruchstellen einer Datenverbindung, die von einzelnen sich von der Datenverbindung entfernenden Datennetzknoten ausgelöst werden. Anfangs existiert, wie in Fig. 3 dargestellt ist, in einem dritten Datennetz mit mehreren mobilen Datennetzknoten eine erste Datenverbindung von einem Quellterminal 0 zu einem Zielterminal 5. Die Datenverbindung umfasst die Datennetzknoten 1, 2, 3 und 4 und ist in Fig. 3 gestrichelt dargestellt sowie Mit ① bezeichnet. Der Datennetzknoten 3 der ersten Datenverbindung bewegt sich nun von seinem Ursprungsplatz weg (in Fig. 3 mit② bezeichnet). Das dritte Ausführungsbeispiel des erfindungsgemäßen Verfahrens basiert nun auf einer optimierten frühen Verbindungserneuerung, auch als Optimized Early Route Update (OPERU) bezeichnet. Das OPERU-Verfahren wird von dem sich bewegenden Datennetzknoten 3 initiiert. Anhand seiner Vorhersageeinheiten erfährt der Datennetzknoten 3, dass alle bei ihm eingehenden und von ihm ausgehenden Datenverbindungen auf Grund seiner Bewegung bald abbrechen werden.

Darauf reagiert der Datennetzknoten 3 mit dem Aussenden einer OPERU_REQ-Nachricht (in Fig. 3 mit③bezeichnet). Diese Nachricht umfasst die Adresse des Vorgänger-Datennetzknotens 2 des sich bewegenden Datennetzknotens 3, des Nachfolger-Datennetzknotens 4 des sich bewegenden Datennetzknotens 3 und des Zielterminals 5, sowie einen Zähler für die Anzahl der Hops zum Ziel. Ferner umfasst sie eine Sequenznummer. Die OPERU_REQ-Nachricht wird nur lokal an die benachbarten Datennetzknoten vom sich bewegenden Datennetzknoten 3 gesendet, also an die Datennetzknoten 2 und 4.

Nunmehr können mehrere Situationen eintreten:
1. Mindestens einer der angesprochenen Datennetzknoten 2 und 4 antwortet mit einer OPERU REP-Nachricht auf die OPERU_REQ-Nachricht des sich bewegenden Datennetzknotens 3. In dieser Antwort-Nachricht bestätigt der entsprechende Datennetzknoten 2 oder 4, dass er den Vorgänger-Datennetzknoten und den Nachfolger-Datennetzknoten oder das Zielterminal 5 kennt. Damit ist eine alternative Route bzw. eine zweite Datenverbindung als Ersatz für die erste Datenverbindung gefunden.
2. Es antworten mindestens zwei Datennetzknoten auf die OPERU_REQ-Nachricht. Ein Datennetzknoten antwortet, dass er den Vorgänger-Datennetzknoten kennt, und ein Datennetzknoten antwortet, dass er den Nachfolger-Datennetzknoten oder das Zielterminal kennt. Hier kann nun eine weitere Fallunterscheidung durchgeführt werden:
   a) Ein Datennetzknoten antwortet mit einer OPERU_REP-Nachricht, falls entweder Vorgänger-Datennetzknoten, Nachfolger-Datennetzknoten oder Zielterminal gekannt sind (in Fig. 3 mit④ bezeichnet). Wenn ein anderer Datennetzknoten die OPERU_REP-Nachricht empfängt und die andere Seite der Bruchstelle der ersten Datenverbindung kennt und diese OPERU_REP-Nachricht auch empfangen hat, sendet er seine eigene OPERU_REP-Nachricht direkt an den Vorgänger-Datennetzknoten der Bruchstelle. Dadurch wird eine 3-Hop-Verbindung zwischen zwei Bruchstellen eingerichtet.
   b) Mehrere Datennetzknoten antworten auf die OPERU_REQ-Nachricht. Auch in diesem Fall sind beide Seiten der Bruchstelle der ersten Datenverbindung vertreten, allerdings wird keine alternative zweite Datenverbindung aufgebaut. Um dennoch eine Route finden zu können, sendet der Datennetzknoten 3 eine neue OPERU_REQ-Nachricht. Diese enthält die benachbarten Datennetzknoten, die geantwortet haben und deren bekannte Datennetzknoten. Gibt es einen Datennetzknoten, der zwei Datennetzknoten aus der OPERU_REQ-Nachricht von beiden Seiten der Bruchstelle in seiner Nachbarschaft hat, so existiert eine 4-Hop-Verbindung als Alternative. Dieser Datennetzknoten antwortet mit einer OPERU_REP-Nachricht direkt in Richtung des Vorgänger-Datennetzknotens.
3. Kein Datennetzknoten antwortet auf die OPERU_REQ-Nachricht bzw. Datennetzknoten antworten mit benachbarten Datennetzknoten der gleichen Seite der Bruchstelle. Dann schlägt das OPERU-Verfahren fehl.

Empfängt der Vorgänger-Datennetzknoten eine OPERU_REP-Nachricht mit einer alternativen Route, kann er die Route akzeptieren oder weiterhin die vorherige Route verwenden. Akzeptiert der Vorgänger-Datennetzknoten die neue Route und ändert sich dadurch die Anzahl der Hops der Datenverbindung zwischen dem Quell- und Zielterminal, so muss der Vorgänger-Datenknoten das Quellterminal 0 über die neue Situation mittels einer OPERU_INFO-Nachricht informieren. Bei Erhalten der OPERU_INFO-Nachricht entscheidet seinerseits das Quellterminal 0, ob es die Änderungen der Route akzeptiert oder statt dessen eine neue Routensuche initiiert.

Zusammenfassend sei erwähnt, dass das von allen oben erläuterten Verfahren das OPERU-Verfahren die geringste Signalisierung benötigt. Daher können die Verfahren auch gestaffelt gemeinsam angewendet werden. In diesem Fall bietet es sich an, dass das OPERU-Verfahren als erstes Verfahren eingesetzt wird. Innerhalb des OPERU-Verfahrens bemerkt auch der Vorgänger-Datennetzknoten einer Bruchstelle, dass mittels des OPERU-Verfahrens eine zweite Datenverbindung bzw. eine Alternativroute gesucht wird. Der Vorgänger-Datennetzknoten setzt dann einen Timer OPERU_MAX_DURATION. Erhält er innerhalb der durch den Timer vorgegebenen Zeitdauer keine Antwort, löst er das ERU-Verfahren aus. Führt dieses Verfahren auch nicht zum Erfolg, wird als letzte lokale Möglichkeit das ERRA-Verfahren gestartet, da das ERRA-Verfahren auch ohne eine Datenverbindung auskommt.

Scheitern alle lokalen Verfahren zur Suche einer neuen Datenverbindung, wird das Quellterminal informiert. Dieses wird dann wie im Standardverfahren vorgesehen, eine neue Routensuche beginnen bzw. dem anfordernden Dienst mitteilen, dass im Moment keine Route zum Zielterminal auffindbar ist.

Mit der vorliegenden Erfindung ist es also möglich, in Datennetzen mit Datenverbindungen mit einer stark schwanken Übertragungsqualität schnell und ohne großen Aufwand auf alternative Datenverbindungen auszuweichen. Dadurch kann trotz der sich ändernden Qualität von Datenverbindungen ein hoher Datendurchsatz und eine geringe Verzögerung der Datenübertragung bei einem geringen Signalisierungsaufwand erreicht werden. Die Erfindung eignet sich insbesondere zum Einsatz in Multihop-Funknetzen, die als Relaisstationen bzw. Datennetzknoten mobile Funkterminals aufweisen. In einem derartigen Datennetz kann sich die Qualität einer bestehenden Datenverbindung sehr schnell ändern, sodass ohne Einsatz der Erfindung nur ein geringer Datendurchsatz und vor allem große Verzögerungen bei der Übertragung auftreten. Mit der Erfindung ist es dagegen möglich, unter Einsatz von nur geringem technischen Aufwand eine relativ hohe Datenübertragungsrate und geringe Verzögerungszeiten insbesondere bei der Übertragung von Datenpaketen zu erzielen. Dies wirkt sich insbesondere vorteilhaft bei Ende-Zu-Ende-Verbindungen aus, über welche beispielsweise Multimediadaten übertragen werden.

## Patentansprüche

1. Verfahren zum Steuern von Datenverbindungen in einem Datennetz mit einer Vielzahl von Datennetzknoten, bei dem die Übertragungsqualität einer ersten Datenverbindung anhand der Anpassungen einer oder mehrerer für die erste Datenverbindung eingesetzten Kodierungen beurteilt und abhängig von der Beurteilung eine zweite Datenverbindung aufgebaut wird, die als Ersatz für die erste Datenverbindung genutzt wird, wobei die Beurteilung der übertragungsqualität der ersten Datenverbindung **dadurch** erfolgt, dass anhand der eingesetzten Kodierungen mindestens ein an der ersten Datenverbindung beteiligter erster Datennetzknoten eine Aussage trifft, ob die Übertragungsqualität der ersten Datenverbindung einen Schwellwert unterschreitet, **dadurch gekennzeichnet, dass** bei einer Aussage, dass die Übertragungsqualität der ersten Datenverbindung einen Schwellwert unterschreitet, der mindestens eine erste Datennetzknoten die Suche nach der zweiten Datenverbindung initiiert, wobei die Suche durch Aussenden einer ersten Nachricht vom mindestens einen ersten Datennetzknoten an zweite Datennetzknoten initiiert wird.

2. Verfahren nach Anspruch 1, **dadurch gekennzeichnet, dass** die Nachricht die Anzahl der Übertragungen, die Adresse eines Senders und die Adresse eines Empfängers von Daten der ersten Datenverbindung umfasst.

3. Verfahren nach Anspruch 1 oder 2, **dadurch gekennzeichnet, dass** die Nachricht mit einer anderen Kodierung verarbeitet wird als die bei der ersten Datenverbindung eingesetzte(n) Kodierung(en).

4. Verfahren nach Anspruch 3, **dadurch gekennzeichnet, dass** die andere Kodierung eine höhere Kodierung als die bei der ersten Datenverbindung eingesetzte(n) Kodierung(en) ist.

5. Verfahren nach einem der vorangehenden Ansprüche, **dadurch gekennzeichnet, dass** die zweite Datenverbindung genutzt wird, wenn die erste Datenverbindung abbricht.

6. Vorrichtung zum Steuern von Datenverbindungen in einem Datennetz mit einer Vielzahl von Datennetzknoten, die derart ausgebildet ist, dass die Übertragungsqualität einer ersten Datenverbindung anhand der Anpassungen einer oder mehrerer für die erste Übertragungsdatenverbindung eingesetzten Kodierungen beurteilt und abhängig von der Beurteilung eine zweite Datenverbindung aufgebaut wird, die als Ersatz für die erste Datenverbindung genutzt wird, wobei mindestens ein an der ersten Datenverbindung beteiligter erster Datennetzknoten ausgebildet ist, um die Beurteilung der Übertragungsqualität der ersten Datenverbindung **dadurch** vorzunehmen, dass er anhand der eingesetzten Kodierungen eine Aussage trifft, ob die Übertragungsqualität der ersten Datenverbindung einen Schwellwert unterschreitet, **dadurch gekennzeichnet, dass** der mindestens eine erste Datennetzknoten ferner ausgebildet ist, um bei einer Aussage, dass die erste Übertragungsqualität der Datenverbindung einen Schwellwert unterschreitet, die Suche nach der zweiten Datenverbindung zu initiieren, und der mindestens eine erste Datennetzknoten ferner ausgebildet ist, die Suche durch Aussenden einer ersten Nachricht an zweite Datennetzknoten zu initiieren.

7. Vorrichtung nach Anspruch 6, **dadurch gekennzeichnet, dass** die Nachricht die Anzahl der Übertragungen, die Adresse eines Senders und die Adresse eines Empfängers von Daten der ersten Datenverbindung umfasst.

8. Vorrichtung nach Anspruch 6 oder 7, **dadurch gekennzeichnet, dass** die Nachricht eine andere Kodierung aufweist als die bei der ersten Datenverbindung eingesetzte(n) Kodierung(en).

9. Vorrichtung nach Anspruch 8, **dadurch gekennzeichnet, dass** die andere Kodierung eine höhere Kodierung als die bei der ersten Datenverbindung eingesetzte(n) Kodierung(en) ist.

10. Vorrichtung nach einem der Ansprüche 6 bis 9,
**dadurch gekennzeichnet, dass** sie ausgebildet ist, um auf die zweite Datenverbindung umzuschalten, wenn die erste Datenverbindung abzubrechen droht.

11. Vorrichtung nach einem der Ansprüche 6 bis 10,
**dadurch gekennzeichnet, dass** sie ausgebildet ist, um auf die zweite Datenverbindung umzuschalten, wenn für die erste Datenverbindung eine vorgegebene Kodierung eingesetzt wird.

12. Vorrichtung nach einem der Ansprüche 6 bis 11,
**dadurch gekennzeichnet, dass** das Datennetz ein Funkdatennetz umfasst und mindestens zwei der Datennetzknoten Funkterminal sind.

## Claims

1. A method for controlling data connections in a data network having a plurality of data network nodes, in which the transmission quality of a first data connection is assessed on the basis of the modifications made to one or plural codings used for the first data connection and a second data connection is established irrespective of such assessment which will then be used instead of the first data connection, said transmission quality assessment being performed by at least one first data network node involved in the first data connection drawing a conclusion, from the codings used, as to whether the transmission quality of the first data connection is below a threshold value **characterized in that** when the conclusion is that the transmission quality of the first data connection is below a threshold value, said at least one first data network node will initiate a search for the second data connection, such search being initiated by a first message being sent from at least one first data network node to second data network nodes.

2. The method of claim 1 **characterized in that** said message contains the number of transmissions, the address of a sender and the address of a receiver of data of said first data connection.

3. The method of claims 1 or 2 **characterized in that** said message will be processed with a different coding than the coding(s) used in the first data connection.

4. The method of claim 3 **characterized in that** the different coding is a higher coding than the coding(s) used in the first data connection.

5. The method of one of the preceding claims **characterized in that** the second data connection will be used when the first data connection breaks.

6. A device for controlling data connections in a data network having a plurality of data network nodes which is formed such that the transmission quality of a first data connection is assessed on the basis of the modifications made to one or plural codings used for the first transmission data connection and - depending on such assessment - a second data connection is established which will then be used instead of the first data connection, with at least one first data network node involved in the first data connection being designed such that it will assess the transmission quality of the first data connection by drawing a conclusion, from the codings used, as to whether the transmission quality of the first data connection is below a threshold value **characterized in that** said at least one first data network node is furthermore designed such that it will initiate a search for the second data connection when reaching the conclusion that the first data connection is below a threshold value, and said at least one first data network node is furthermore designed such that it will initiate the search by sending a first message to second data network nodes.

7. The method of claim 6 **characterized in that** said message contains the number of transmissions, the address of a sender and the address of a receiver of data of the first data connection.

8. The method of claims 6 or 7 **characterized in that** the message has a different coding than the coding(s) used in the first data connection.

9. The method of claim 8 **characterized in that** the different coding is a higher coding than the coding(s) used in the first data connection.

10. The method of one of claims 6 to 9 **characterized in that** it is designed such that it will switch over to the second data connection when the first data connection is on the verge of breaking.

11. The method of one of claims 6 to 10 **characterized in that** it is designed such that it will switch over to the second data connection when a predetermined coding is used for the first data connection.

12. The method of one of claims 6 to 11 **characterized in that** said data network comprises a wireless data network and at least two of said data network nodes are wireless terminals.

## Revendications

1. Procédé pour la commande de liaisons de données dans un réseau de données comportant une pluralité de noeuds de réseau de données, dans le cas de laquelle la qualité de transmission d'une première liaison de données est évaluée au moyen des adaptations d'un ou plusieurs codage utilisés pour la première liaison de données et indépendamment de l'évaluation, une deuxième liaison de données est établie, qui est utilisée en tant que substitut de la première liaison de données, sachant que l'évaluation de la qualité de transmission de la première liaison de données s'effectue à travers le fait qu'au moyen des codages utilisés, au moins un premier noeud de données de réseau participant à la première liaison de données déclare si la qualité de transmission de la première liaison de données reste inférieure à une valeur seuil, **caractérisé en ce que**, en cas de déclaration informant que la qualité de transmission de la première liaison de données reste inférieure à une valeur seuil, le premier noeud de réseau de données minimum initie la recherche de la deuxième liaison de données, sachant que la recherche est initiée par l'envoi d'un premier message du premier noeud de données de réseau minimum à un deuxième noeud de données de réseau.

2. Procédé selon revendication 1, **caractérisé en ce que** le message comprend le nombre de transmissions, l'adresse d'un émetteur et l'adresse d'un récepteur de données de la première liaison de données.

3. Procédé selon revendication 1 ou 2, **caractérisé en ce que** le message est traité avec un codage autre que le (s) codage (s) utilisé (s) dans le cas de la première liaison de données.

4. Procédé selon revendication 3, **caractérisé en ce que** l'autre codage est un codage plus élevé que le (s) codage (s) utilisé (s) dans le cas de la première liaison de données.

5. Procédé selon l'une des revendications précédentes, **caractérisé en ce que** la deuxième liaison de données est utilisée lorsque la première liaison de données s'interrompt.

6. Dispositif pour la commande de liaisons de données dans un réseau de données comportant une pluralité de noeuds de réseau de données, qui est conçu de telle manière que la qualité de transmission d'une première liaison de données est évaluée au moyen d'adaptations d'un ou plusieurs codages utilisés pour la première liaison de données de transmission et indépendamment de l'évaluation, une deuxième liaison de données est établie, qui est utilisée en tant que substitut de la première liaison de données, sachant qu'au moins un premier noeud de réseau de données participant à la première liaison de données est formé, pour procéder à l'évaluation de la qualité de transmission de la première liaison de données à travers le fait qu'il déclare au moyen des codages utilisés, si la qualité de transmission de la première liaison de données est inférieure à une valeur seuil, **caractérisé en ce que** le premier noeud de réseau de données minimum est formé en plus, pour, dans le cas d'une déclaration, informant que la première qualité de transmission de la liaison de données est inférieure à une valeur seuil, initier la recherche d'une deuxième liaison de données et le premier noeud de réseau de données minimum est formé ensuite pour initier la recherche par l'envoi d'un premier message à un deuxième noeud de réseau de données.

7. Dispositif selon revendication 6, **caractérisé en ce que** le message comprend le nombre de transmissions, l'adresse d'un émetteur et l'adresse d'un récepteur de données de la première liaison de données.

8. Dispositif selon revendication 6 ou 7, **caractérisé en ce que** le message présente un codage autre que le (s) codage (s) utilisé (s) dans le cas de la première liaison de données.

9. Dispositif selon revendication 8, **caractérisé en ce que** l'autre codage est un codage plus élevé que le (s) codage (s) utilisé (s) dans le cas de la première liaison de données.

10. Dispositif selon l'une des revendications 6 à 9, **caractérisé en ce qu'**il est conçu pour commuter sur la deuxième liaison de données, lorsque la première liaison de données menace de s'interrompre.

11. Dispositif selon l'une des revendications 6 à 10, **caractérisé en ce qu'**il est conçu pour commuter sur la deuxième liaison de données lorsqu'un codage prédéfini est utilisé pour la première liaison de données.

12. Dispositif selon l'une des revendications 6 à 11, **caractérisé en ce que** le réseau de données comprend un réseau de données radio et au moins deux des noeuds de réseau de données sont des terminaux radio.
